# EUROPEAN PATENT SPECIFICATION

(11) **EP 2 847 944 B1**
(45) Date of publication and mention of the grant of the patent: **08.09.2021**
(21) Application number: 13724696.3
(22) Date of filing: 10.05.2013
(51) Int. Cl.: H04L 12/58

(54) **TRANSMITTING AND DISPLAYING OFFLINE DATA**
ÜBERTRAGUNG UND ANZEIGE VON OFFLINE-DATEN
TRANSMISSION ET AFFICHAGE DE DONNÉES HORS LIGNE

(30) Priority: 11.05.2012 CN 201210147824
(43) Date of publication of application: 18.03.2015
(73) Proprietor: Alibaba Group Holding Limited, Grand Cayman (KY)
(72) Inventor: HU, Hongwei, Hangzhou 310013 (CN)
(74) Representative: Barker Brettell LLP
(86) International application number: PCT/US2013/040540
(87) International publication number: WO 2013/170141

(56) References cited:
- US-A1- 2009 305 732
- Apple: "iPhone User Guide (For iOS 3.1 Software)", , 9 September 2009 (2009-09-09), XP055004252, Retrieved from the Internet: URL:http://manuals.info.apple.com/en_US/iP hone_iOS3.1_User_Guide.pdf [retrieved on 2011-08-08]
- None

## Description

### TECHNICAL FIELD

The present disclosure relates to the field of computer, and more specifically, to a method, an apparatus, and a system for offline transmitting and displaying offline data.

### BACKGROUND

Under conventional data transmission and prompting techniques for communication application software, the communication application software usually reads relevant data from a server and displays data of relevant applications on a pre-determined position of an interface after a user logs into the communication application software. Using QQ™ chat software as an example, a data transmission flow of the communication application software is as follows.

At a first step, the user successfully logs into QQ™ after the user inputs a correct user name and a password. At a second step, a client terminal transmits requests for querying data of each application to an application server according to applications loaded onto QQ™ after successfully logging into QQ™.

At a third step, the application server responds to the requests after receiving the requests for querying and using a QQ™ user name logged from the client terminal as a querying condition to acquire transmission data corresponding to each request, and returning the transmission data to the client terminal of the QQ™ application program.

At a fourth step, the client terminal of the QQ™ application program receives the transmission data returned by the application server and analyzes the transmission data. At a fifth step, the client terminal displays information of the transmission data such as a number of updated information in QQ™ space at a display area corresponding to the QQ™ application program.

As shown from the conventional techniques, the server will not push and display information such as the number of updated information in QQ™ space or a number of unread emails unless the user logs into the QQ™ application software that is a type of chatting software. Such data are unknown in case that the user does not log in. The user cannot know whether there are new chatting messages or system messages instantly, which causes a delay of the user for acquiring information. Such data is not transmitted in an offline transmission method.

No effective solutions are currently proposed for the problem that the conventional communication software can only transmit and display data when the user of the communication application software is online, thereby causing the user to be unable to instantly acquire updated information.

Example devices having notification services are described in US 2009/305732 and also in "iPhone User Guide (For iOS 3.1 Software)", (20090909), XP055004252.

In US 2009/305732, a method and apparatus to manage notification service connections is disclosed, in which a mobile device schedules a notification service connection message transmission interval for each of a plurality of notification service connections. The mobile device also associates a notification service connection message transmission window with each notification service connection message transmission interval. The mobile device synchronizes transmission of notification service connection messages based on overlapping notification service connection message transmission windows. Responsive to receiving a notification message on one of the notification service connections, an icon badge is displayed on the mobile device for the appropriate application.

In XP055004252, an iPhone device may be configured to receive push notifications to alert a user of new information, even when the application isn't running. Notifications differ depending upon the application, but may include text or sound alerts, and a numbered badge on the application's icon on the Home screen. Push notifications require the user's device to be registered on a server with a unique key.

### SUMMARY

This Summary is provided to introduce a selection of concepts in a simplified form that are further described below in the Detailed Description.

The invention provides for a method in accordance with claim 1, namely a method comprising: when communication application software on a client terminal is in an offline state, starting a background service corresponding to the communication application software at the client terminal; establishing a communication connection between the client terminal and a message server via the background service; reading, via the message server, local data of the communication application software to obtain the login information of the communication application software at the client terminal; receiving offline data corresponding to the login information from the message server via the background service; analyzing the offline data to generate a prompt message for displaying; and displaying the prompt message at a pre-determined display area, wherein the offline data is saved by the message server and synchronized with a query server before the client terminal receives the offline data from the message server via the background service), and the query server is regularly checked to read the saved offline data after the client terminal starts the background service.

The invention also provides for an apparatus in accordance with claim 8, namely an apparatus comprising: a starting connection module that, when communication application software on a client terminal is in an offline state, is adapted to start a background service corresponding to the communication application software at the client terminal to establish a communication connection between the client terminal and a message server via the background service, wherein the message server is adapted to read local data of the communication application software to obtain the login information of the communication application software at the client terminal; an offline receiving module that is adapted to receive offline data corresponding to the login information from the message server via the background service; an analyzing module that is adapted to analyze the offline data to generate a prompt message for displaying; a displaying module (512) that is adapted to display the prompt message at a pre-determined display area; and a query server, wherein the offline data is saved by the message server and synchronized with the query server before the client terminal receives the offline data from the message server via the background service, and wherein the query server is arranged to be regularly checked to read the saved offline data after the client terminal starts the background service.

The dependent claims relate to further embodiments.

### BRIEF DESCRIPTION OF THE DRAWINGS

To better illustrate embodiments of the present disclosure, the following is a brief introduction of the FIGs to be used in the description of the embodiments. It is apparent that the following FIGs only relate to some embodiments of the present disclosure. A person of ordinary skill in the art can obtain other FIGs according to the FIGs in the present disclosure without creative efforts.
FIG. 1 illustrates a diagram of an example system for transmitting and displaying offline data, which example is useful for understanding the invention.
FIG. 2 illustrates a diagram of an example system for transmitting and displaying offline data according to the present invention.
FIG. 3 illustrates a flowchart of an example method for transmitting and displaying the offline data according to the present disclosure.
FIG. 4 illustrates a snapshot of an example desktop of the example system for transmitting and displaying the offline data according to the present disclosure.
FIG. 5 illustrates a diagram of an example apparatus for transmitting and displaying the offline data according to the present disclosure.

### DETAILED DESCRIPTION

The following descriptions are described by reference to the FIGs and some examples.

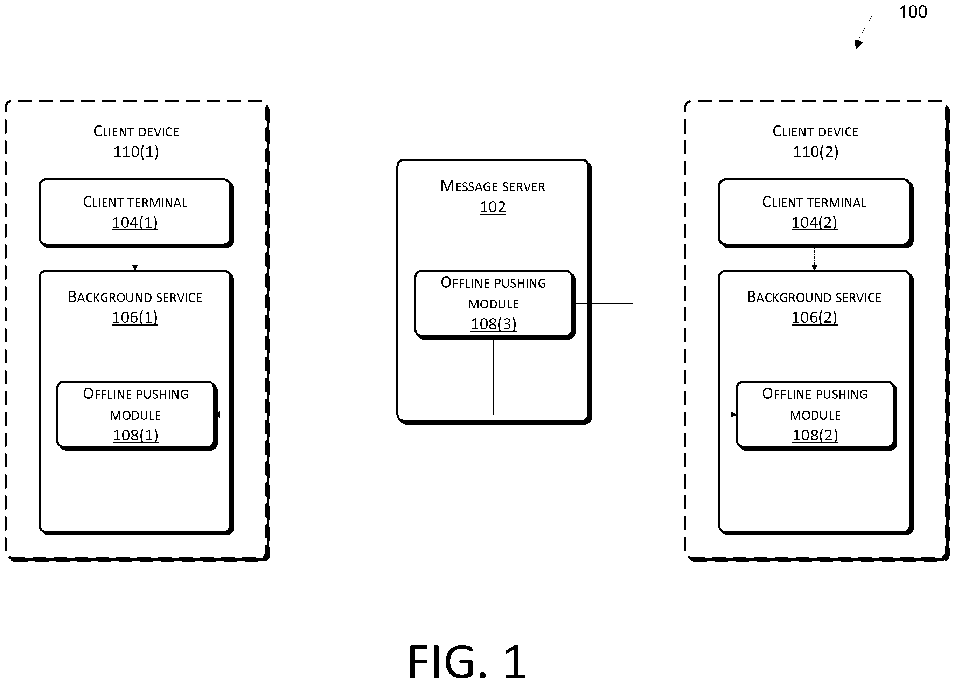

FIG. 1 illustrates a structural diagram of an example system 100 for transmitting and displaying offline data. As shown in FIG.1, the system 100 may include a message server 102 and one or more client terminals such as a client terminal 104(1) and a client terminal 104(2). For example, the message server 102 and the client terminal 104(1) or 104(2) may serve or be part of communication application software.

The message server 102 stores offline data. When the communication application software is under an offline state, the client terminal 104(1) or 104(2) starts a background service 106(1) or 106(2) respectively corresponding to the communication application software so as to build, via the background service 106(1) or 106(2) respectively, a communication connection between the client terminal 104(1) or 104(2) and the message server 102. The client terminal 104(1) or 104(2) respectively analyzes the offline data after receiving the offline data from the message server 102, and display a generated prompt message on a pre-determined display area.

In this example of the present disclosure, the client terminal such as the client terminal 104(1) builds a communication connection relationship with the message server 102 by starting the background service 106(1) when the communication application software at the client terminal 104(1) is under the offline state so that the message server 102 pushes existing offline data to the client terminal 104(1). For example, the background service 106(1) or 106(2) may be associated with an offline pushing module 108(1) or 108(2) at its client terminal 104(1) or 104(2) respectively to receive the offline data from an offline pushing module 108(3) at the message server 102. For example, the background service 106(1) may be separate from the client terminal 104(1) or be integrated into the client terminal 104(1).

The client terminal 104(1) analyzes the offline data after receiving the offline data, and displays the offline data at the pre-determined display area. For example, the client terminal 104(1) or 104(2) may reside at a client device 110(1) or 110(2) respectively and each of the client device 110(1) or 110(2) may have a display screen to present the pre-determined display area, which is not shown in FIG. 1.

In this example when the communication application software on the client terminal is under the offline state, the client terminal starts the background service corresponding to the communication application software to establish the communication connection between the client terminal and the message server. After receiving the offline data, the client terminal analyzes the offline data and displays the offline data at the pre-determined display area.

As a user can instantly acquire information data updated on the message server without logging into the communication application software of the client terminal, the problem under conventional techniques that the user can only transmit and display data when the user is online so that the user may not timely acquire the offline data is resolved. The user can acquire the updated information data instantly, thereby improving an efficiency of the user for acquiring the information data and user experiences.

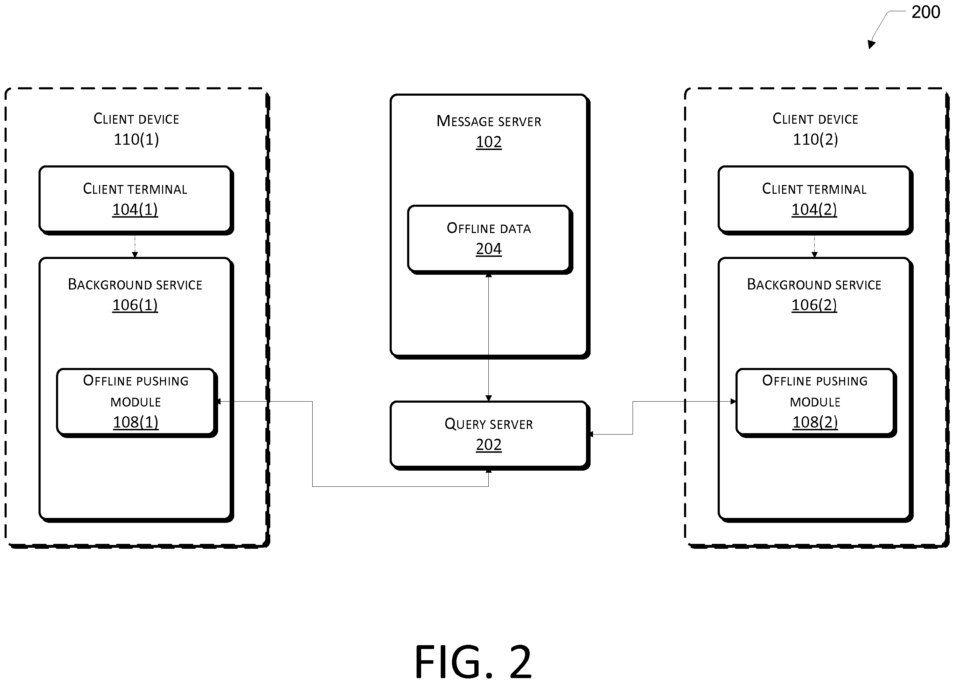

FIG. 2 illustrates another structural diagram of an example system 200 for transmitting and displaying offline data based on the example system 100 as shown in FIG. 1. The system 200 may further include a query server 202 based on the system 100.

The query server 202 synchronizes offline data 204 saved in the message server 102 in real time. The client terminal such as the client terminal 104(1) regularly checks the query server 202 to read the saved offline data 204 after the background service 106(1) is started.

The system 200 is based on the system 100. In the example of FIG. 2, the message server 102 only needs to save or store collected offline data 204 and synchronizes the offline data 204 with the query server 202. The client terminal such as the client terminal 104(1) regularly visits the query server 202 according to pre-determined needs to acquire the offline data 204 such as offline messages.

In this example embodiment, the offline messages are uniformly managed and the client terminal may regularly query to obtain the offline messages according to needs, thereby improving a flexibility of the offline messages.

Specifically, the examples as shown in FIG. 1 and FIG. 2 implement transmitting and displaying offline message data for the user when the user is offline. For example, even when the user does not log into the communication application software, the transmission of the offline data may be implemented by the background service and the prompt and display of the offline data may be conducted through a desktop shortcut at a display screen at the client terminal.

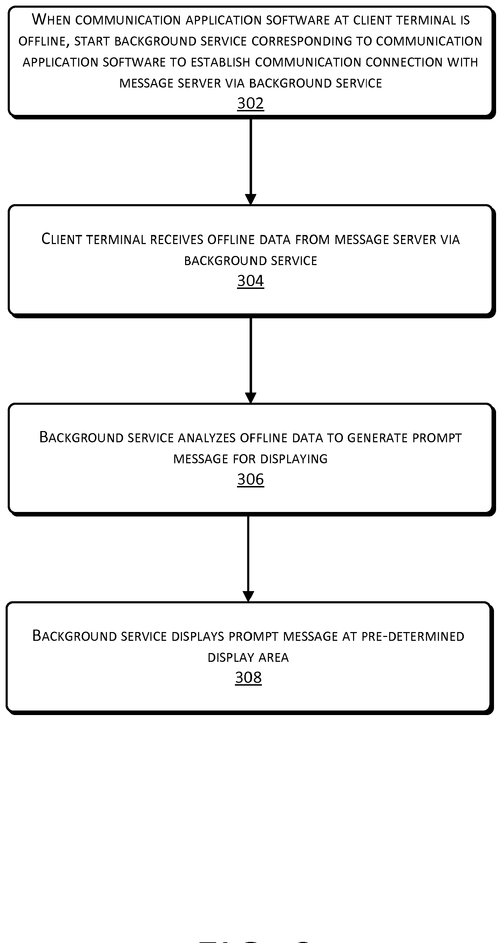

FIG. 3 illustrates a flowchart of an example method for transmitting and displaying the offline data according to the present disclosure.

At 302, when the communication application software at the client terminal is offline or under the offline state, the background service corresponding to the communication application software at the client terminal is activated and the client terminal and the message server establish the communication connection via the background service.

At 304, the client terminal receives the offline data from the message server via the background service.

At 306, the background service analyzes the offline data to generate the prompt message for displaying.

At 308, the background service displays the prompt message at the pre-determined display area.

In this example of the present disclosure, the client terminal establishes the communication connection relationship with the message server by starting the background service when the communication application software at the client terminal is under the offline state so that the message server pushes the existing offline data to the client terminal. The client terminal analyzes the offline data after receiving the offline data, and displays the offline data at the pre-determined area.

As the user can instantly acquire information data updated on the message server without logging into the communication application software of the client terminal, the problem under conventional techniques that the user can only transmit and display data when the user is online so that the user may not timely acquire the offline data is resolved. The user can acquire the updated information data instantly, thereby improving the efficiency of the user for acquiring the information data and user experiences.

After the background service corresponding to the communication application software is started on the client terminal to establish the communication connection between the client terminal and the message server via the background service, the example method includes the following operations. The message server reads log-in information for logging into the communication application software at the client terminal, queries according to the log-in information to acquire the offline data corresponding to the log-in information; and pushes the offline data to the client terminal.

For example, the offline data involved in the example embodiment of the present invention may be a number of messages of each application at application software such as the communication application software. To avoid safety problems caused by pushing the offline data, in some examples, the offline data does not include links to each application at the communication application software or detailed contents of the messages.

Taking QQ™ application software for example, QQ™ offline data may include a number of QQ™ offline messages, a number of new messages at QQ™ space, a number of new messages at QQ™ email. Taking Aliwangwang™ application software for example, the offline data may include a number of offline messages at Aliwangwang™ application software, a number of system messages, etc.

For example, the background service in some example embodiments may be an independent executable file such as (exe file). A name of the background service may be offlineserver.exe, alwaysonline.exe, etc. The background service may be set into startup item of the client device during a software product installation process of the communication application software such as QQ™, Aliwangwang™, etc. When the client device starts, the background service may start automatically. The implementation operations may be as follows.

Firstly, after the client terminal starts, the background service starts. The background service starts monitoring message procedures. In other words, the background service starts when the client device starts and timely establishes the communication with the message server.

Secondly, after the background service at the client terminal starts monitoring message procedures, local data of the communication application software is read to obtain the log-in information of the communication application software. For instance, the log-in information may be a log-in account and/or a log-in password.

Thirdly, as the client terminal has established the communication connection with the message server, the message server actively pushes the offline data (such as offline instant message, system message, various application messages, etc) corresponding to an account of the client terminal to the background service at the client terminal in a form of protocol data.

Then, the client terminal may display received offline data in certain forms at the pre-determined display area. For example, the client terminal may display a number of messages and tips at a desktop shortcut of the account at a display screen. As the offline date is updated continuously, the client terminal will also continuously update the number of messages and tips.

In another example, when the communication application software at the client terminal is under the offline state, the method may further include the following operations. After the communication application software is successfully installed on the client terminal, the background service acquires an original icon data element of a shortcut of the communication application software (icon information and position information) and saves the original icon data element into a shortcut file. After the client terminal re-starts, the client terminal scans to acquire the original icon data element of the shortcut of the communication application software recorded by the background service.

For example, after the communication application software is installed at the client terminal, a relevant shortcut file of the communication application software is generated. The shortcut file may be saved as a data file with a suffix of *.lnk. The shortcut file may include an icon data element with a suffix of *.icon, and the icon data element may include the icon information and the position information of the shortcut.

When the client terminal starts the background service, the background service loads the icon data element. For instance, the background service intercepts and carries the icon information and the position information of the shortcut of the communication application software on the desktop. The icon information may include data such as a size, a shape, and content to be displayed by the shortcut. The position information may represent a position of a classified grid of the shortcut on the display screen as well as a position coordinates thereof. The background service saves all information data so that the icon information and the position information of the shortcut of the communication application software are scanned each time when the client terminal starts the background service. Thus, the background service can accurately locate the icon position of the shortcut.

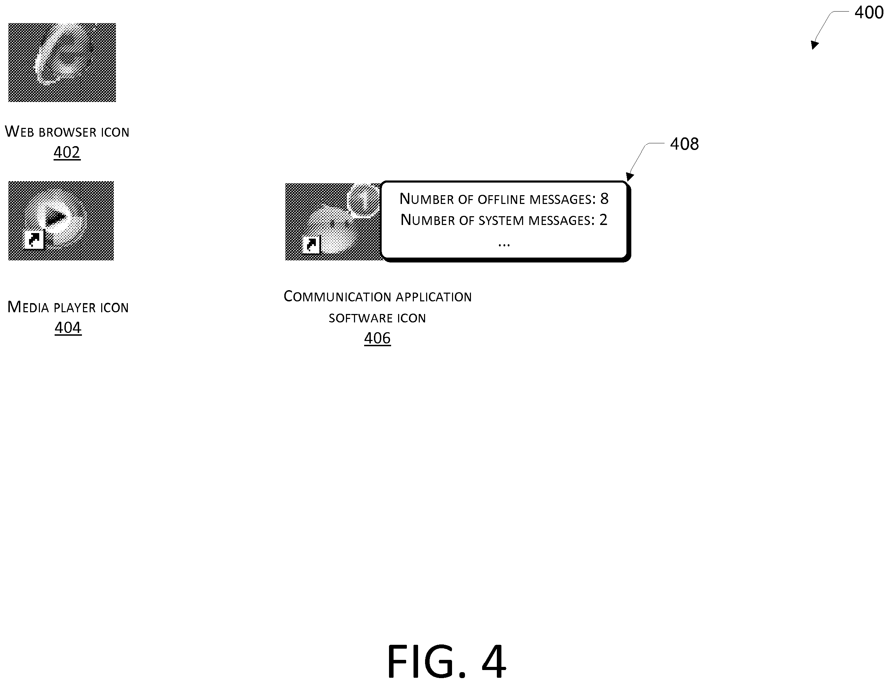

In one example embodiment, before the background service displays the prompt message at the pre-determined display area, the method may further include the following operations. The background service, according to the recorded original icon data element of the shortcut of the communication application software, sets information of the display window that displays the prompt message. A display area such as the display window may be adjacent to an icon position of the shortcut. After the prompt message is obtained, the prompt message is loaded into the display window. This example embodiment implements a first example technical scheme to display the offline information at the client terminal. For example, the background service firstly sets the information of the display window that displays the offline data, such as a position, a size, or a shape of the display window that displays the prompt message. FIG. 4 illustrates a snapshot of an example display area at a desktop 400. The desktop 400 presents a plurality of icons, such as a web browser icon 402, a media player icon 404, communication application software icon 406. Each icon may be represented by a shortcut image. In the example of FIG. 4, the communication application software icon is associated with a display window 408 that displays the offline information. The display window 408 may be in a shape of square and located at a right side of the communication application software icon 406 to determine the display area. Parameters of the display window may be determined by the background service according to the acquired icon information and position information of the shortcut.

In the above example embodiment, the background service locates the shortcut icon of the current communication application software displayed at the desktop based on the loaded icon information and position information of the shortcut of the communication application software. The background service also designs the display window 408 in a form of an icon that is relatively deviated from the shortcut icon according to the pre-determined information of the display window 408, and presents the offline information at the display window with certain display effects. In the example of FIG. 4, a total number of offline messages, such as 8, and a total number of system messages, such as 2, are displayed at the display window 408. As the client terminal has established the communication with the message server in real time, when the offline information at the message server changes, the number of newly updated messages is pushed into the display window 408.

During the process, the client terminal receives the offline data pushed by the message server and loads the offline data into the preset display window. For instance, the preset display window may be drawn by utilizing Windows™ graphic design interface (GDI). The display window that carries the offline data is combined with the icon of the original shortcut to obtain the display area finally displayed on the desktop. For example, data of the display window may be saved as a data element into the shortcut file with the suffix of *.lnk. When the client terminal starts the background service, the shortcut file is updated so that the process for generating and replacing by the new shortcut is completed.

For another example, before the background service displays the prompt message at the pre-determined display area, the example method may further include the following operations. The original icon data element of the shortcut file of the communication application software is read. The prompt message generated by the background service is integrated with the original icon data element of the shortcut file to generate a new icon data element. A new shortcut file corresponding to the communication application software is obtained according to the new icon data element to generate a new shortcut of the communication application software loaded with the prompt message. This example embodiment implements a second example technical scheme to display the offline information at the client terminal.

The client terminal firstly reads the icon information and position information of the current communication application software from the shortcut file, and then integrates the pushed offline information with the saved original icon data element to obtain a new icon data element. For example, a new shortcut file may be generated based on the new icon data element. A format of the new shortcut file may be the same as that of the original shortcut file. After the original shortcut file is substituted by the new shortcut file, a shortcut including the prompt message is obtained. Alternatively, an address pointing to the original icon data element in the original shortcut file may be amended into a saved address pointing to the new icon data element. A new shortcut icon with a display of a number of messages is generated and used to replace the previous icon displayed on the desktop.

For example, during a detailed implementation, the background service already carries the icon data element (including the icon information and the position information) of the original shortcut of the communication application software and saves the original shortcut file (which may be named as 1.lnk) of the shortcut of the current communication application software. The original shortcut file may be saved under a subdirectory under a folder such as "system disk\Documents and Settings\user name\desktop."

After the client terminal receives the offline data pushed by the message server, the icon of the shortcut loaded with the offline data may be drawn by utilizing Windows™ GDI to form a data file of the new icon data element. The data file of the new icon data element is saved in a location specified by the background service. Then, the background service utilizes an instance of Windows™ COM IID_IShellLink to create a new shortcut file (which may be named as 2.lnk) to save the new icon data element, and sets an attribute of the new icon data element the same as the original shortcut file, such as an address to start the background service executable file (exe), i.e., a target attribute and description information, i.e., a description attribute.

The original shortcut file under the subdirectory may be replaced by the new shortcut file. Thus, the original shortcut is replaced by the newly created shortcut loaded with the offline data. After the new shortcut is obtained, the display at the desktop (which may be represented by listview) is refreshed (which may be done by the command redraw) to complete the process for generation and replacement. During the above process, the generated icon data element and the new shortcut file are saved in the folder specified by the background service and are finally used to replace the old short file which may be, for instance, saved under the folder "system disk\Documents and Settings\user name\desktop."

In one example, to reduce a complexity of replacing data, after the new icon data element is obtained, a target address attribute pointing to the original icon data element in the original shortcut file may be amended to point to the new icon data element without implementing the process for generating the new shortcut file.

The method for acquiring the new shortcut file corresponding to the communication application software according to the new icon data element may be as follows. The new shortcut file created according to the new icon data element may be used to substitute the original shortcut file. Alternatively, the target address attribute of the original icon data element saved in the original shortcut file may be amended as the address of the new icon data element. Thus, the new shortcut is displayed at the pre-determined position.

Thus, the present disclosure provides two schemes for drawing the shortcut icon and generating the shortcut icon for substitution via the background service to prompt the offline information in real time.

For example, before the client terminal receives the offline data from the message server via the background service, the method may further include the following operations. The offline data is pushed to the client terminal in real time by the message server via an offline pushing module. Alternatively, the message server saves the offline data and synchronizes the offline data with a query server. After the client terminal starts the background service, the query server is regularly checked to read the saved offline data.

In one example the message server is used to push the offline data. According to the invention, the query server that synchronizes with the message server is used. The offline data may be uniformly saved and managed by the query server and the client terminal obtains the offline data by regularly visiting the query server. Such a technical scheme may lighten the workload of the message server so that the user may acquire the offline data according to demand, thereby increasing flexibility.

In the example embodiments, the operation that the background service displays the prompt message at the pre-determined display area may include the following steps. The background service intercepts a coordinate message of a moving mouse. When the coordinate information of the mouse is within an icon area, the background service displays the prompt message at the pre-determined display area.

In the example embodiments, the background service intercepts coordinate information of the moving mouse. When the coordinate information of the mouse moves to the displayed icon area, the display window that displays messages such as a classification of detailed messages and its corresponding number of messages is drawn and presented, and updated in real time by the communication between a background procedure and a server.

It should be noted that the steps shown in the flowchart of the FIGs can be executed by one or more processors configured with computer-executable instruction or a computing system. Although the flowcharts show a logic sequence, in some situations, one or more steps may be not executed or may be executed in a different sequence as shown in the flowcharts.

In addition, the communication application software in the example embodiments may be instant communication software or any other communication application software such as email. The preset disclosure does not impose any restriction herein.

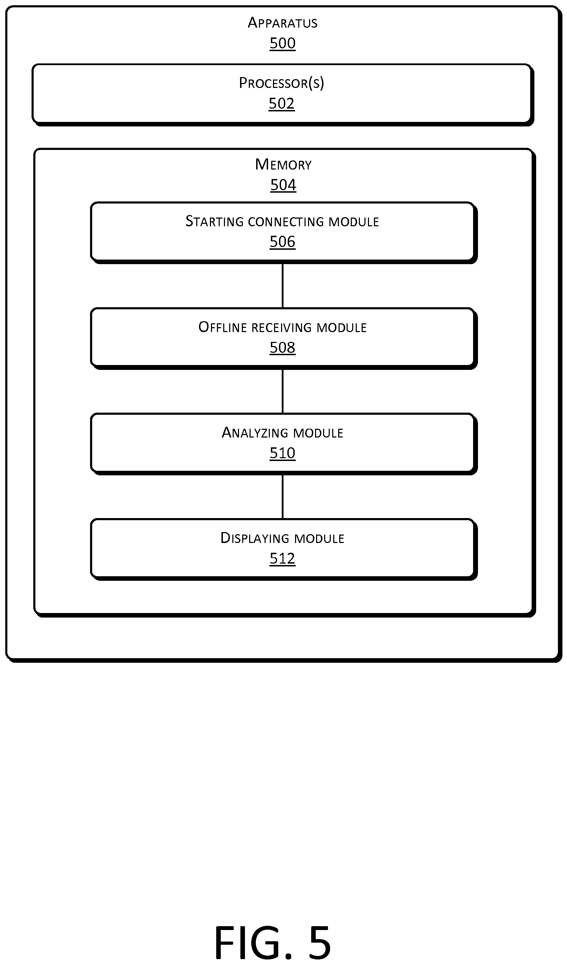

FIG. 5 illustrates a diagram of an example apparatus 500 for transmitting and displaying the offline data. The apparatus 500 may include one or more processor(s) 502 and memory 504. The memory 504 is an example of computer-readable media. As used herein, "computer-readable media" includes computer storage media and communication media.

Computer storage media includes volatile and non-volatile, removable and non-removable media implemented in any method or technology for storage of information such as computer-executable instructions, data structures, program modules, or other data. Examples of computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage apparatus, or any other non-transmission medium that can be used to store information for access by a computing apparatus. In contrast, communication media may embody computer-readable instructions, data structures, program modules, or other data in a modulated data signal, such as a carrier wave. As defined herein, computer storage media does not include communication media.

The memory 504 may store therein program units or modules and program data. In the example of FIG. 5, the memory 504 may store therein a starting connection module 506, an offline receiving module 508, an analyzing module 510, and a displaying module 512. The starting connecting module 506, when the communication application software on the client terminal is offline, starts the background service corresponding to the communication application software at the client terminal so that the client terminal establishes a communication connection between the client terminal and the message server via the background service.

The offline receiving module 508 receives the offline data from the message server via the background service at the client terminal. The analyzing module 510 analyzes the offline data to generate the prompt message for displaying. The displaying module 512 displays the prompt message at the pre-determined display area.

In this example embodiment, when the communication application software on the client terminal is under the offline state, the client terminal starts the background service corresponding to the communication application software to establish the communication connection between the client terminal and the message server. After receiving the offline data, the client terminal analyzes the offline data and displays the offline data at the pre-determined display area.

As the user can instantly acquire information data updated on the message server without logging into the communication application software of the client terminal, the problem under conventional techniques that the user can only transmit and display data when the user is online so that the user may not timely acquire the offline data is resolved. The user can acquire the updated information data instantly, thereby improving an efficiency of the user for acquiring the information data and user experiences.

In another example embodiment, the apparatus 500 may further include an obtaining module and a scanning module (both not shown in FIG. 5). After the communication application software is successfully installed on the client terminal, the obtaining module through the background service acquires the original icon data element of the shortcut of the communication application software and saves the original icon data element into the shortcut file. After the client terminal re-starts, the scanning module starts scanning to acquire the original icon data element of the shortcut of the communication application software recorded by the background service.

In another example embodiment, the apparatus 500 may further include a setting module and a loading module (both not shown in FIG. 5). The setting module, according to the recorded original icon data element of the shortcut of the communication application software by the background service, sets display window information for displaying the prompt message. A display area may be adjacent to an icon position of the shortcut. After the prompt message is obtained, the loading module loads the prompt message into the display window. In the example embodiment, the background service locates the shortcut icon of the current communication application software displayed at the desktop based on the loaded icon information and position information of the shortcut of the communication application software. The background service also designs the display window in a form of icon that is relatively deviated from the shortcut icon of the communication application software according to the pre-determined information of the display window, and presents the offline information at the display window with certain display effects. The offline information may include a number of total offline messages.

In another example embodiment, the apparatus 500 may further include a reading module, an integrating module, and a generating module (all of them not shown in FIG. 5). The reading module reads the original icon data element of the shortcut file of the communication application software. The integrating module integrates the prompt message generated by the background service with the original icon data element of the shortcut file to generate a new icon data element. The generating module obtains a new shortcut file corresponding to the communication application software, according to the new icon data element, to generate a new shortcut of the communication application software loaded with the prompt message.

This example embodiment implements the second example technical scheme to display the offline information at the client terminal. The client terminal firstly reads the icon information and position information of the current communication application software from the shortcut file, and then integrates the pushed offline information with the saved original icon data element to obtain a new icon data element. For example, a new shortcut file may be generated based on the new icon data element. A format of the new shortcut file may be the same as that of the original shortcut file. After the original shortcut file is substituted by the new shortcut file, a shortcut including the prompt message is obtained. Alternatively, an address pointing to the original icon data element in the original shortcut file may be amended into a saved address pointing to the new icon data element. A new shortcut icon with a display of a number of messages is generated and used to replace the previous icon displayed on the desktop.

The present techniques implement real-time application at the client terminal, especially the communication application software. When the user is offline, offline data are transmitted and displayed. The offline data may include offline messages and offline system messages, which are presented at the shortcut icon of the desktop in real-time.

Those of ordinary skill in the art should understand that each module or step of the present techniques can be realized by a computing device such as a general-purpose computing device. The modules or steps may be centralized or performed by a single computing device, or distributed on a distributive network formed by a plurality of computing devices. Optionally, the modules or steps may be implemented by one or more processors configured with processor-executable instructions. Such instructions may be stored in one or more computer-readable media and executed by one or more computing devices. Alternatively, each module may be manufactured as a single integrated circuit module, or multiple modules may be manufactured as a single integrated circuit module. The present disclosure does not restrict the implementation by any specific hardware, software, or a combination thereof.

## Claims

1. A method comprising:
when communication application software on a client terminal (104(1), 104(2)) is in an offline state, starting (302) a background service (106(1), 106(2)) corresponding to the communication application software at the client terminal (104(1), 104(2));
establishing a communication connection between the client terminal (104(1), 104(2)) and a message server (102) via the background service (106(1), 106(2));
reading, via the message server (102), local data of the communication application software to obtain the login information of the communication application software at the client terminal (104(1), 104(2));
receiving offline data corresponding to the login information from the message server (102) via the background service (106(1), 106(2));
analyzing (306) the offline data to generate a prompt message for displaying; and
displaying (308) the prompt message at a pre-determined display area,
wherein the offline data is saved by the message server (102) and synchronized with a query server (202) before the client terminal (104(1), 104(2)) receives the offline data from the message server (102) via the background service (106(1), 106(2)), and
the query server (202) is regularly checked to read the saved offline data after the client terminal (104(1), 104(2)) starts the background service (106(1), 106(2)).

2. The method as recited in claim 1, further comprising:
before the communication application software at the client terminal (104(1), 104(2)) is offline,
installing the communication application software at the client terminal (104(1), 104(2));
obtaining an original icon data element of a shortcut of the communication application software;
saving the original icon data element into a shortcut file;
after the client terminal (104(1), 104(2)) re-starts, scanning to obtain the original icon data element of the shortcut of the communication application software recorded by the background service (106(1), 106(2)).

3. The method as recited in claim 2, further comprising:
before the background service (106(1), 106(2)) displays the prompt message at the pre-determined display area, setting information of a display window (408) for displaying the prompt message according to the recorded original icon data element of the shortcut of the communication application software; and
after obtaining the prompt message, loading the prompt message into the display window.

4. The method as recited in any preceding claim, further comprising:
before the background service (106(1), 106(2)) displays the prompt message at the pre-determined display area, reading the original icon data element of the shortcut of the communication application software;
integrating the prompt message with the original icon data element of the shortcut to generate a new icon data element; and
obtaining a new shortcut file corresponding to the communication application software according to the new icon data element to generate a new shortcut of the communication application software loaded with the prompt message.

5. The method as recited in any preceding claim, further comprising before the client terminal (104(1), 104(2)) receives the offline data from the message server (102) via the background service (106(1), 106(2)), receiving a push of the offline data from the message server (102) in real time via an offline pushing module (108(3)).

6. The method as recited in any preceding claim, further comprising:
after establishing the communication connection between the client terminal (104(1), 104(2)) and the message server (102) via the background service (106(1), 106(2));
querying, by the message server (102), according to the log-in information to acquire the offline data corresponding to the log-in information; and
pushing, by the message server (102), the offline data to the client terminal (104(1), 104(2)).

7. The method as recited in any preceding claim, wherein the displaying the prompt message at the pre-determined display area comprises:
intercepting coordinate information of a moving mouse; and
when the coordinate information of the moving mouse is within an icon area, displaying the prompt message at the pre-determined display area.

8. An apparatus comprising:
a starting connection module (506) that, when communication application software on a client terminal (104(1), 104(2)) is in an offline state, is adapted to start
a background service (106(1), 106(2)) corresponding to the communication application software at the client terminal (104(1), 104(2)) to establish a communication connection between the client terminal (104(1), 104(2)) and a message server (102) via the background service (106(1), 106(2)), wherein the message server (102) is adapted to read local data of the communication application software to obtain the login information of the communication application software at the client terminal (104(1), 104(2));
an offline receiving module (508) that is adapted to receive offline data corresponding to the login information from the message server (102) via the background service (106(1), 106(2));
an analyzing module (510) that is adapted to analyze the offline data to generate a prompt message for displaying;
a displaying module (512) that is adapted to display the prompt message at a pre-determined display area; and
a query server (202), wherein the offline data is saved by the message server (102) and synchronized with the query server (202) before the client terminal (104(1), 104(2)) receives the offline data from the message server (102) via the background service (106(1), 106(2)), and
wherein the query server (202) is arranged to be regularly checked to read the saved offline data after the client terminal (104(1), 104(2)) starts the background service (106(1), 106(2)).

9. The apparatus as recited in claim 8, further comprising:
an obtaining module that, after the communication application software is installed on the client terminal (104(1), 104(2) is adapted to obtain through the background service (106(1), 106(2)) an original icon data element of a shortcut of the communication application software and saves the original icon data element into a shortcut file; and
a scanning module that, after the client terminal (104(1), 104(2)) re-starts, is adapted to start scanning to obtain the original icon data element of the shortcut of the communication application software recorded by the background service (106(1), 106(2)).

10. The apparatus as recited in claim 9, further comprising:
a setting module that, according to the recorded original icon data element of the shortcut of the communication application software by the background service (106(1), 106(2)), sets information of a display window for displaying the prompt message; and
a loading module that, after the prompt message is obtained, is adapted to load
the prompt message into the display window.

11. The apparatus as recited in claim 9 or claim 10, further comprising:
a reading module that is adapted to read
the original icon data element of the shortcut file of the communication application software;
an integrating module that is adapted to integrate the prompt message generated by the background service (106(1), 106(2)) with the original icon data element of the shortcut file to generate a new icon data element; and
a generating module that adapted to obtain a new shortcut file corresponding to the communication application software, according to the new icon data element, to generate a new shortcut of the communication application software loaded with the prompt message.

## Patentansprüche

1. Verfahren, umfassend:
wenn sich Kommunikationsanwendungssoftware an einem Client-Endgerät (104(1), 104(2)) in einem Offline-Zustand befindet, Starten (302) eines Hintergrunddienstes (106(1), 106(2)), der der Kommunikationsanwendungssoftware entspricht, auf dem Client-Endgerät (104(1), 104(2));
Aufbauen einer Kommunikationsverbindung zwischen dem Client-Endgerät (104(1), 104(2)) und einem Nachrichtenserver (102) über den Hintergrunddienst (106(1), 106(2));
Auslesen von lokalen Daten der Kommunikationsanwendungssoftware über den Nachrichtenserver (102), um die Anmeldeinformationen der Kommunikationsanwendungssoftware auf dem Client-Endgerät (104(1), 104(2)) zu erhalten;
Empfangen von Offline-Daten, die den Anmeldeinformationen entsprechen, vom Nachrichtenserver (102) über den Hintergrunddienst (106(1), 106(2));
Analysieren (306) der Offline-Daten, um eine Aufforderungsnachricht zur Anzeige zu erzeugen; und
Anzeigen (308) der Aufforderungsnachricht in einem vorbestimmten Anzeigebereich,
wobei die Offline-Daten vom Nachrichtenserver (102) gespeichert und mit einem Abfrageserver (202) synchronisiert werden, bevor das Client-Endgerät (104(1), 104(2)) die Offline-Daten vom Nachrichtenserver (102) über den Hintergrunddienst (106(1), 106(2)) empfängt, und
nachdem das Client-Endgerät (104(1), 104(2)) den Hintergrunddienst (106(1), 106(2)) gestartet hat, der Abfrageserver (202) regelmäßig überprüft wird, um die gespeicherten Offline-Daten auszulesen.

2. Verfahren nach Anspruch 1, weiter umfassend:
Installieren der Kommunikationsanwendungssoftware auf dem Client-Endgerät (104(1), 104(2)), bevor die Kommunikationsanwendungssoftware auf dem Client-Endgerät (104(1), 104(2)) offline ist;
Erhalten eines Originalsymbol-Datenelements eines Shortcuts der Kommunikationsanwendungssoftware;
Speichern des Originalsymbol-Datenelements in einer Shortcut-Datei;
Scannen, nachdem das Client-Endgerät (104(1), 104(2)) neu gestartet wurde, um das vom Hintergrunddienst (106(1), 106(2)) aufgezeichnete Originalsymbol-Datenelement des Shortcuts der Kommunikationsanwendungssoftware zu erhalten.

3. Verfahren nach Anspruch 2, weiter umfassend:
Einstellen von Informationen eines Anzeigefensters (408) zum Anzeigen der Aufforderungsnachricht gemäß dem aufgezeichneten Originalsymbol-Datenelement des Shortcuts der Kommunikationsanwendungssoftware, bevor der Hintergrunddienst (106(1), 106(2)) die Aufforderungsnachricht in dem vorbestimmten Anzeigebereich anzeigt; und
Laden der Aufforderungsnachricht in das Anzeigefenster, nachdem die Aufforderungsnachricht erhalten wurde.

4. Verfahren nach einem vorstehenden Anspruch, weiter umfassend:
Auslesen des Originalsymbol-Datenelements des Shortcuts der Kommunikationsanwendungssoftware, bevor der Hintergrunddienst (106(1), 106(2)) die Aufforderungsnachricht in dem vorbestimmten Anzeigebereich anzeigt;
Einbinden der Aufforderungsnachricht in das Originalsymbol-Datenelement des Shortcuts, um ein neues Symbol-Datenelement zu erzeugen; und
Erhalten einer neuen Shortcut-Datei, die der Kommunikationsanwendungssoftware entspricht, gemäß dem neuen Symbol-Datenelement, um einen neuen Shortcut der Kommunikationssoftware zu erzeugen, die mit der Aufforderungsnachricht geladen wird.

5. Verfahren nach einem vorstehenden Anspruch, das, bevor das Client-Endgerät (104(1), 104(2)) über den Hintergrunddienst (106(1), 106(2)) die Offline-Daten vom Nachrichtenserver (102) empfängt, weiter das Empfangen einer Push-Übertragung der Offline-Daten vom Nachrichtenserver (102) in Echtzeit über ein Offline-Pushmodul (108(3)) umfasst.

6. Verfahren nach einem vorstehenden Anspruch, weiter umfassend:
nach dem Aufbauen der Kommunikationsverbindung zwischen dem Client-Endgerät (104(1), 104(2)) und dem Nachrichtenserver (102) über den Hintergrunddienst (106(1), 106(2));
Abfragen gemäß den Anmeldeinformationen durch den Nachrichtenserver (102), um die Offline-Daten, die den Anmeldeinformationen entsprechen, zu erfassen; und
Übertragen der Offline-Daten durch den Nachrichtenserver (102) im Push-Verfahren an das Client-Endgerät (104(1), 104(2)).

7. Verfahren nach einem vorstehenden Anspruch, wobei das Anzeigen der Aufforderungsnachricht im vorbestimmten Anzeigebereich umfasst:
Abfangen von Koordinateninformationen einer sich bewegenden Maus; und
Anzeigen der Aufforderungsnachricht in dem vorbestimmten Anzeigebereich, wenn die Koordinateninformationen der sich bewegenden Maus innerhalb eines Symbolbereichs liegen.

8. Vorrichtung, umfassend:
ein Verbindungsstartmodul (506), das dazu geeignet ist, wenn sich Kommunikationsanwendungssoftware an einem Client-Endgerät (104(1), 104(2)) in einem Offline-Zustand befindet, einen Hintergrunddienst (106(1), 106(2)), der der Kommunikationsanwendungssoftware entspricht, auf dem Client-Endgerät (104(1), 104(2)) zu starten, um über den Hintergrunddienst (106(1), 106(2)) eine Kommunikationsverbindung zwischen dem Client-Endgerät (104(1), 104(2)) und einem Nachrichtenserver (102) aufzubauen, wobei der Nachrichtenserver (102) dazu geeignet ist, lokale Daten der Kommunikationsanwendungssoftware auszulesen, um die Anmeldeinformationen der Kommunikationsanwendungssoftware auf dem Client-Endgerät (104(1), 104(2)) zu erhalten;
ein Offline-Empfangsmodul (508), das dazu geeignet ist, über den Hintergrunddienst (106(1), 106(2)) Offline-Daten, die den Anmeldeinformationen entsprechen, vom Nachrichtenserver (102) zu empfangen;
ein Analysemodul (510), das dazu geeignet ist, die Offline-Daten zu analysieren, um eine Aufforderungsnachricht zur Anzeige zu erzeugen;
ein Anzeigemodul (512), das dazu geeignet ist, die Aufforderungsnachricht in einem vorbestimmten Anzeigebereich anzuzeigen; und
einen Abfrageserver (202), wobei die Offline-Daten vom Nachrichtenserver (102) gespeichert und mit dem Abfrageserver (202) synchronisiert werden, bevor das Client-Endgerät (104(1), 104(2)) über den Hintergrunddienst (106(1), 106(2)) die Offline-Daten vom Nachrichtenserver (102) empfängt, und
wobei der Abfrageserver (202) so eingerichtet ist, dass er, nachdem das Client-Endgerät (104(1), 104(2)) den Hintergrunddienst (106(1), 106(2)) gestartet hat, regelmäßig überprüft wird, um die gespeicherten Offline-Daten auszulesen.

9. Vorrichtung nach Anspruch 8, weiter umfassend:
ein Bezugsmodul, das dazu geeignet ist, nachdem die Kommunikationsanwendungssoftware auf dem Client-Endgerät (104(1), 104(2)) installiert wurde, über den Hintergrunddienst (106(1), 106(2)) ein Originalsymbol-Datenelement eines Shortcuts der Kommunikationsanwendungssoftware zu erhalten, und das Originalsymbol-Datenelement in einer Shortcut-Datei speichert; und
ein Scanmodul, das dazu geeignet ist, nachdem das Client-Endgerät (104(1), 104(2)) neu gestartet wurde, das Scannen zu starten, um das vom Hintergrunddienst (106(1), 106(2)) aufgezeichnete Originalsymbol-Datenelement des Shortcuts der Kommunikationsanwendungssoftware zu erhalten.

10. Vorrichtung nach Anspruch 9, weiter umfassend:
ein Einstellmodul, das Informationen eines Anzeigefensters zum Anzeigen der Aufforderungsnachricht gemäß dem vom Hintergrunddienst (106(1), 106(2)) aufgezeichneten Originalsymbol-Datenelement des Shortcuts der Kommunikationsanwendungssoftware einstellt; und
ein Lademodul, das dazu geeignet ist, die Aufforderungsnachricht in das Anzeigefenster zu laden, nachdem die Aufforderungsnachricht erhalten wurde.

11. Vorrichtung nach Anspruch 9 oder Anspruch 10, weiter umfassend:
ein Auslesemodul, das dazu geeignet ist, das Originalsymbol-Datenelement der Shortcut-Datei der Kommunikationsanwendungssoftware auszulesen;
ein Einbindungsmodul, das dazu geeignet ist, die vom Hintergrunddienst (106(1), 106(2)) erzeugte Aufforderungsnachricht in das Originalsymbol-Datenelement der Shortcut-Datei einzubinden, um ein neues Symbol-Datenelement zu erzeugen; und
ein Erzeugungsmodul, das dazu geeignet ist, gemäß dem neuen Symbol-Datenelement eine neue Shortcut-Datei zu erhalten, die der Kommunikationsanwendungssoftware entspricht, um einen neuen Shortcut der Kommunikationsanwendungssoftware zu erzeugen, die mit der Aufforderungsnachricht geladen wird.

## Revendications

1. Procédé comprenant :
lorsqu'un logiciel d'application de communication sur un terminal client (104(1), 104(2)) est dans un état hors ligne, le démarrage (302) d'un service d'arrière-plan (106(1), 106(2)) correspondant au logiciel d'application de communication au niveau du terminal client (104(1), 104(2)) ;
l'établissement d'une connexion de communication entre le terminal client (104(1), 104(2)) et un serveur de messagerie (102) par l'intermédiaire du service d'arrière-plan (106(1), 106(2)) ;
la lecture, par l'intermédiaire du serveur de messagerie (102), de données locales du logiciel d'application de communication pour obtenir les informations d'ouverture de session du logiciel d'application de communication au niveau du terminal client (104(1), 104(2)) ;
la réception de données hors ligne correspondant aux informations d'ouverture de session à partir du serveur de messagerie (102) par l'intermédiaire du service d'arrière-plan (106(1), 106(2)) ;
l'analyse (306) des données hors ligne pour générer un message-guide pour affichage ; et
l'affichage (308) du message-guide au niveau d'une zone d'affichage prédéterminée,
dans lequel les données hors ligne sont sauvegardées par le serveur de messagerie (102) et synchronisées avec un serveur de requête (202) avant que le terminal client (104(1), 104(2)) reçoive les données hors ligne à partir du serveur de messagerie (102) par l'intermédiaire du service d'arrière-plan (106(1), 106(2)), et
le serveur de requête (202) est consulté régulièrement pour lire les données hors ligne sauvegardées une fois que le terminal client (104(1), 104(2)) démarre le service d'arrière-plan (106(1), 106(2)).

2. Procédé selon la revendication 1, comprenant en outre :
avant que le logiciel d'application de communication au niveau du terminal client (104(1), 104(2)) soit hors ligne,
l'installation du logiciel d'application de communication au niveau du terminal client (104(1), 104(2)) ;
l'obtention d'un élément de données d'icône original d'un raccourci du logiciel d'application de communication ;
la sauvegarde de l'élément de données d'icône original dans un fichier de raccourci ;
après le redémarrage du terminal client (104(1), 104(2)), le balayage pour obtenir l'élément de données d'icône original du raccourci du logiciel d'application de communication enregistré par le service d'arrière-plan (106(1), 106(2)).

3. Procédé selon la revendication 2, comprenant en outre :
avant que le service d'arrière-plan (106(1), 106(2)) affiche le message-guide au niveau de la zone d'affichage prédéterminée, la définition d'informations d'une fenêtre d'affichage (408) pour afficher le message-guide selon l'élément de données d'icône original enregistré du raccourci du logiciel d'application de communication ; et
après l'obtention du message-guide, le chargement du message-guide dans la fenêtre d'affichage.

4. Procédé selon l'une quelconque des revendications précédentes, comprenant en outre :
avant que le service d'arrière-plan (106(1), 106(2)) affiche le message-guide au niveau de la zone d'affichage prédéterminée, la lecture de l'élément de données d'icône original du raccourci du logiciel d'application de communication ;
l'intégration du message-guide avec l'élément de données d'icône original du raccourci pour générer un nouvel élément de données d'icône ; et
l'obtention d'un nouveau fichier de raccourci correspondant au logiciel d'application de communication selon le nouvel élément de données d'icône pour générer un nouveau raccourci du logiciel d'application de communication chargé avec le message-guide.

5. Procédé selon l'une quelconque des revendications précédentes, comprenant en outre avant que le terminal client (104(1), 104(2)) reçoive les données hors ligne à partir du serveur de messagerie (102) par l'intermédiaire du service d'arrière-plan (106(1), 106(2)), la réception d'un pousser des informations hors ligne à partir du serveur de messagerie (102) en temps réel par l'intermédiaire d'un module de poussée hors ligne (108(3)).

6. Procédé selon l'une quelconque des revendications précédentes, comprenant en outre :
après l'établissement de la connexion de communication entre le terminal client (104(1), 104(2)) et le serveur de messagerie (102) par l'intermédiaire du service d'arrière-plan (106(1), 106(2)),
la requête, par le serveur de messagerie (102), selon les informations d'ouverture de session d'acquérir les données hors ligne correspondant aux informations d'ouverture de session ; et
la poussée, par le serveur de messagerie (102), des données hors ligne vers le terminal client (104(1), 104(2)).

7. Procédé selon l'une quelconque des revendications précédentes, dans lequel l'affichage du message-guide au niveau de la zone d'affichage prédéterminée comprend :
l'interception d'informations de coordonnées d'une souris en mouvement ; et
lorsque les informations de coordonnées de la souris en mouvement se trouvent au sein d'une zone d'icône, l'affichage du message-guide au niveau de la zone d'affichage prédéterminée.

8. Appareil comprenant :
un module de connexion de démarrage (506) qui, lorsqu'un logiciel d'application de communication sur un terminal client (104(1), 104(2)) est dans un état hors ligne, est adapté pour démarrer un service d'arrière-plan (106(1), 106(2)) correspondant au logiciel d'application de communication au niveau du terminal client (104(1), 104(2)) pour établir une connexion de communication entre le terminal client (104(1), 104(2)) et un serveur de messagerie (102) par l'intermédiaire du service d'arrière-plan (106(1), 106(2)) ; dans lequel le serveur de messagerie (102) est adapté pour lire des données locales du logiciel d'application de communication pour obtenir les informations d'ouverture de session du logiciel d'application de communication au niveau du terminal client (104(1), 104(2)) ;
un module de réception hors ligne (508) qui est adapté pour recevoir des données hors ligne correspondant aux informations d'ouverture de session à partir du serveur de messagerie (102) par l'intermédiaire du service d'arrière-plan (106(1), 106(2)) ;
un module d'analyse (510) qui est adapté pour analyser les données hors ligne pour générer un message-guide pour affichage ; et
un module d'affichage (512) qui est adapté pour afficher le message-guide au niveau d'une zone d'affichage prédéterminée ;
et
un serveur de requête (202), dans lequel les données hors ligne sont sauvegardées par le serveur de messagerie (102) et synchronisées avec le serveur de requête (202) avant que le terminal client (104(1), 104(2)) reçoive les données hors ligne à partir du serveur de messagerie (102) par l'intermédiaire du service d'arrière-plan (106(1), 106(2)), et
dans lequel le serveur de requête (202) est conçu pour être consulté régulièrement pour lire les données hors ligne sauvegardées une fois que le terminal client (104(1), 104(2)) démarre le service d'arrière-plan (106(1), 106(2)).

9. Appareil selon la revendication 8, comprenant en outre :
un module d'obtention qui, une fois que le logiciel d'application de communication est installé sur le terminal client (104(1), 104(2)) est adapté pour obtenir par l'intermédiaire du service d'arrière-plan (106(1), 106(2)) un élément de données d'icône original d'un raccourci du logiciel d'application de communication et sauvegarde l'élément de données d'icône original dans un fichier de raccourci ; et
un module de balayage qui, une fois que le terminal client (104(1), 104(2)) redémarre, est adapté pour démarrer un balayage pour obtenir l'élément de données d'icône original du raccourci du logiciel d'application de communication enregistré par le service d'arrière-plan (106(1), 106(2)).

10. Appareil selon la revendication 9, comprenant en outre :
un module de définition qui, selon l'élément de données d'icône original enregistré du raccourci du logiciel d'application de communication par le service d'arrière-plan (106(1), 106(2)), défini des informations d'une fenêtre d'affichage pour affichage du message-guide ; et
un module de chargement qui, une fois que le message-guide est obtenu, est adapté pour charger le message-guide dans la fenêtre d'affichage.

11. Appareil selon la revendication 9 ou la revendication 10, comprenant en outre :
un module de lecture qui est adapté pour lire l'élément de données d'icône original du fichier de raccourci du logiciel d'application de communication ;
un module d'intégration qui est adapté pour intégrer le message-guide généré par le service d'arrière-plan (106(1), 106(2)) avec l'élément de données d'icône original du fichier de raccourci pour générer un nouvel élément de données d'icône ; et
un module de génération qui est adapté pour obtenir un nouveau fichier de raccourci correspondant au logiciel d'application de communication selon le nouvel élément de données d'icône pour générer un nouveau raccourci du logiciel d'application de communication chargé avec le message-guide.
